# EUROPEAN PATENT APPLICATION

(11) **EP 0 955 487 A2**
(43) Date of publication of application: **10.11.1999**
(21) Application number: 99303572.4
(22) Date of filing: 07.05.1999
(51) Int. Cl.: F16H 21/12

(54) **A motion transfer mechanism**

(30) Priority: 08.05.1998 ZA 9803914
(71) Applicant: Metal Box South Africa Limited, Sandton, Gauteng 2146 (ZA)
(72) Inventor: Bajic, Milan, Johannesburg Gauteng (ZA)
(74) Representative: Watkin, Timothy Lawrence Harvey

(57) **Abstract**

A transfer mechanism (10) for transferring rotary motion at one location to rotary motion at a second, distant location includes a first connecting element (18) having a first end (18.1), which is fixedly connectable to a rotatable member (12) to rotate therewith, in use, and having an opposed end (18.2); and a first linkage assembly (22), having a first end (22.1) which is connected to the opposed end of the first connecting element and an opposed end (22.2) which is constrained to be displaceable reciprocally along a predetermined axis (26). The mechanism also includes an elongate connecting assembly (30), a first end of which is connected to said opposed end of the first linkage assembly (22.2), so that its movement is also constrained along said predetermined axis and at least one further linkage assembly (34), a first end of which is connected to the elongate connecting assembly (30) at a predetermined connection point, the point being spaced from the first linkage assembly and also lying on the predetermined axis (26). The mechanism yet further includes a second connecting element (36) having a first end connected to an opposed end of the further linkage assembly (34), the second connecting element having an opposed end (36.2) which is fixedly connectable, in use, to a second rotatable element (40) so that rotation of the first rotatable element is transferred via the connecting elements, the linkage assemblies and the connecting assembly to identical rotational movement of the second rotatable element.

## Description

**THIS INVENTION** relates to the transfer of motion. More particularly, the invention relates to a transfer mechanism for transferring rotary motion at one location to rotary motion at a second, distant location.

According to the invention, there is provided a transfer mechanism for transferring rotary motion at one location to rotary motion at a second, distant location, the transfer mechanism including
a first connecting element having a first end, which is fixedly connectable to a rotatable member to rotate therewith, in use, and having an opposed end;
a first linkage assembly, having a first end which is connected to the opposed end of the first connecting element and an opposed end which is constrained to be displaceable reciprocally along a predetermined axis;
an elongate connecting assembly, a first end of which is connected to said opposed end of the first linkage assembly, so that its movement is also constrained along said predetermined axis;
at least one further linkage assembly, a first end of which is connected to the elongate connecting assembly at a predetermined connection point, the point being spaced from the first linkage assembly and also lying on the predetermined axis; and
a second connecting element having a first end connected to an opposed end of the further linkage assembly, the second connecting element having an opposed end which is fixedly connectable, in use, to a second rotatable element so that rotation of the first rotatable element is transferred via the connecting elements,

The invention is intended particularly for use in applications where the use of chain drives, gear drives, or the like, which require lubrication, is undesirable. With the provision of the transfer mechanism of the invention, the applicant believes that a far more hygienic arrangement can be obtained. Thus, the invention has specific, but not necessarily exclusive, application in the food and beverage packaging industry.

It will be appreciated that the first connecting element may be in the form of a first crank, a first end of which is connected to the first rotatable member and an opposed, second end of which is connected to the first linkage assembly.

The said first linkage assembly may include a pair of link arms, with a first end of each link arm being pivotally connected to the second end of the first crank at a pivotal connection point, the arms diverging from the connection point so that a second end of each link arm lies on the axis. The second end of each link arm may be connected to a slide which is constrained to slide reciprocally along the predetermined axis.

The elongate connecting assembly may comprise a pair of elongate connecting rods, a first end of each connecting rod being pivotally connected to a second end of its associated link arm via the slide so that the first end of each rod is constrained to be displaceable reciprocally along the predetermined axis. An opposed, second end of each connecting rod may be mounted on a slide, the slide at the second end of each arm also being constrained to be displaceable reciprocally along the predetermined axis. If desired, the connecting rods of the connecting assembly may be supported along their lengths to inhibit flexing thereof.

The said further linkage assembly may also comprise a pair of link arms having substantially the same configuration as the link arms of the first linkage assembly, with a first end of each link arm of the said further linkage assembly being connected to the opposed end of its associated connecting rod pivotally via the slide and a second end of each link arm being pivotally connected to the first end of the second connecting element.

The second connecting element may be in the form of a second crank with an opposed, second end of the second crank being fixedly connected to the second rotatable element. The second rotatable element may be in the form of a driven shaft.

The transfer mechanism as described above, may further include a plurality of linkage assemblies, each of which has an end which is connected to the connecting assembly, such that the rotary motion of the first rotatable member is imparted to each rotatable member to which each of the linkage assemblies is connected. Certain of the linkage assemblies may be aligned with each other on opposite sides of the connecting assembly. The linkage assemblies may lie in different planes, the planes being at an obtuse angle relative to one another.

The invention is now described by way of example with reference to the accompanying diagrammatic drawings.

In the drawings,
Figure 1 shows a schematic representation of a transfer mechanism, in accordance with the invention, for transferring rotary motion at one location to rotary motion at a second, distant location;
Figure 2 shows a schematic representation of a transfer mechanism in accordance with a second embodiment of the invention; and
Figure 3 shows a schematic representation of a transfer mechanism in accordance with a third embodiment of the invention.

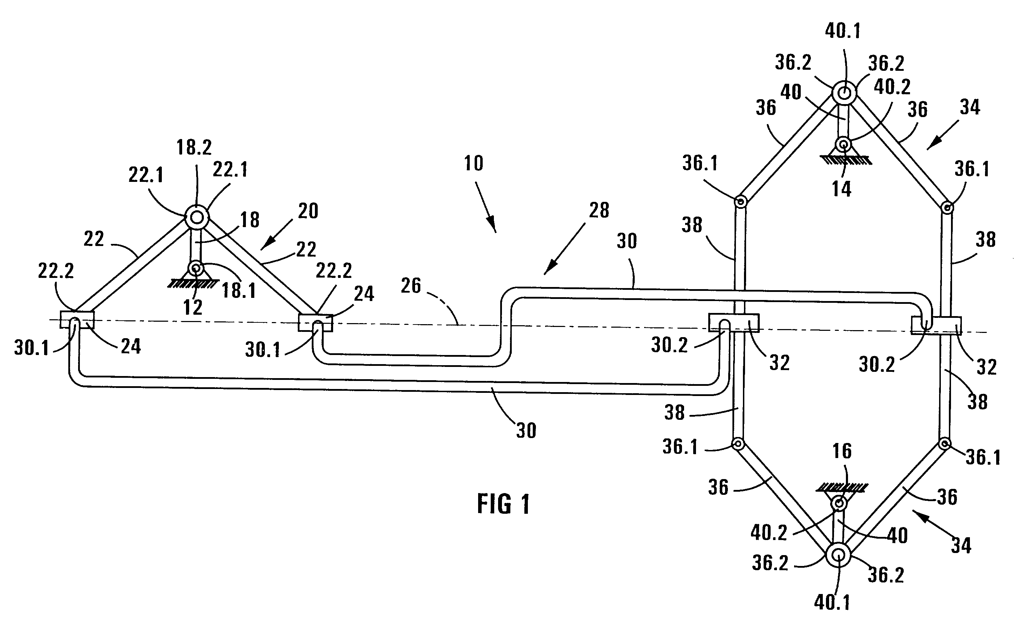

Referring firstly to Figure 1 of the drawings, reference numeral 10 generally designates a transfer mechanism, in accordance with the invention, for transferring rotary motion at one location to rotary motion at a second, distant location. The transfer mechanism 10 transfers rotary motion at a first, drive shaft 12 to one or more driven shafts 14, 16.

The mechanism 10 comprises a connecting element in the form of a crank 18. A first end 18.1 of the crank 18 is fixedly mounted to the shaft 12 to be rotatable together therewith. A first linkage assembly 20 is connected to an opposed end 18.2 of the crank 18. The linkage assembly 20 comprises a pair of link arms 22. A first end of 22.1 of each link arm 22 is pivotally connected to the end 18.2 of the crank 18. An opposed end 22.2 of each link arm 22 is mounted on a slide 24 which is constrained to move along a predetermined axis 26. The arms 22 diverge away from each other from their connecting point to the end 18.2 of the crank 18 so that the slides 24 lie in spaced relationship relative to each other on the axis 26.

The transfer mechanism 10 also includes an elongate connecting assembly 28. The connecting assembly 28 comprises a pair of connecting rods 30. A first end 30.1 of each rod 30 is pivotally connected to the slide 24 as are the ends 22.2 of the arms 22.

An opposed, second end 30.2 of each rod 30 is pivotally connected to a slide 32 at the location to which it is desired to transfer the rotary motion from the drive shaft 12. The slides 32 are arranged in spaced relationship and also lie on the axis 26.

The transfer mechanism 10 still further includes a further linkage assembly 34 associated with each driven shaft 14, 16.

Each linkage assembly 34 also comprises a pair of spaced link arms 36. A first end 36.1 of each link arm 36 is connected to its associated slide 32 via an extension arm 38. The end 36.1 of the arm 36 is pivotally connected to its associated extension arm 38. An opposed end 36.2 of each link arm 36 is pivotally connected to an end 40.1 of a further crank 40. An opposed end 40.2 of the crank 40 is fixedly connected to its associated driven shaft 14, 16.

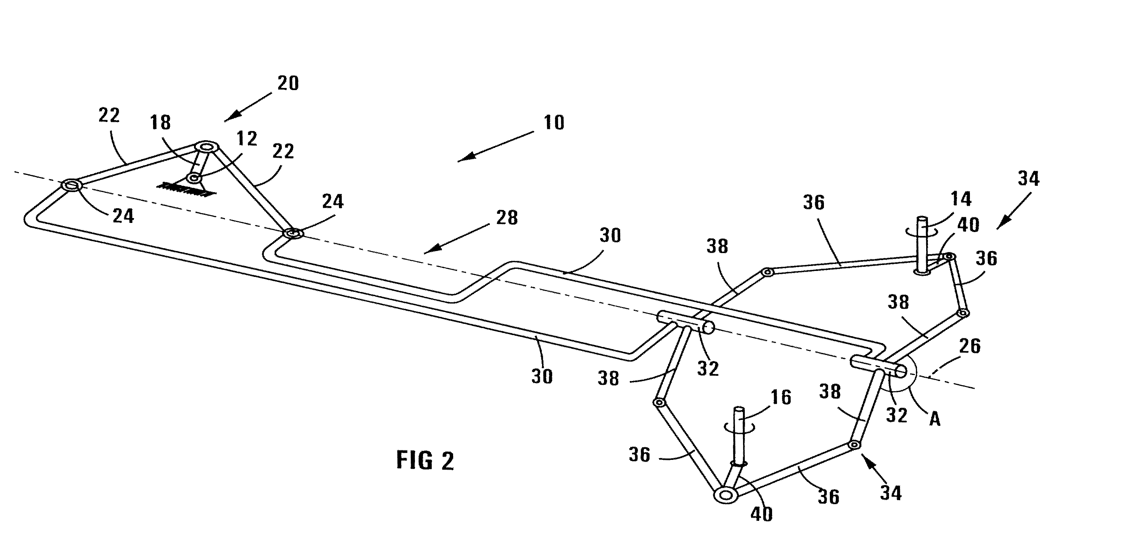

Referring now to Figure 2 of the drawings a second embodiment of a transfer mechanism, in accordance with the invention, is illustrated. With reference to Figure 1 of the drawings, like reference numerals refer to like parts, unless otherwise specified.

It is to be noted that, in the embodiment of the invention illustrated in Figure 1 of the drawings, the two further linkage assemblies 34 lie in the same plane. In the embodiment of the invention illustrated in Figure 2 of the drawings, the linkage assemblies 34 lie at a predetermined obtuse angle A to each other.

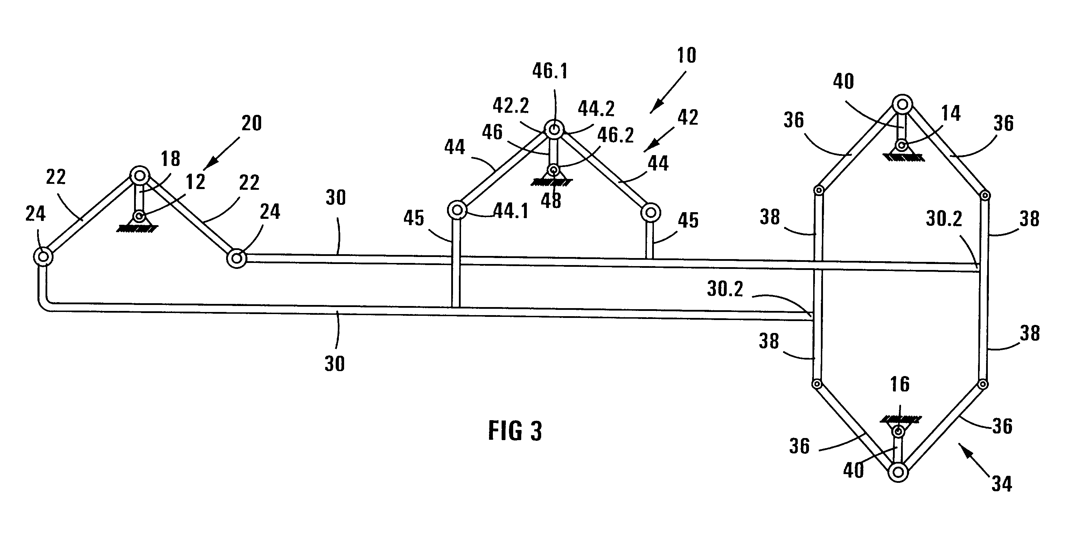

Referring to Figure 3 of the drawings, yet a further embodiment of the transfer mechanism, in accordance with the invention, is illustrated. Once again, with reference to Figure 1 and 2 of the drawings, like reference numerals refer to like parts, unless otherwise specified.

In this embodiment of the invention, yet a further linkage assembly 42 is mounted on the connecting rods 30 of the connecting assembly 28 intermediate the first linkage assembly 20 and the linkage assemblies 34. The linkage assembly 42 comprises a pair of link arms 44 of substantially the same configuration as the link arms 22. A first end 44.1 of each link arm 44 is connected to its associated connecting rod 30 via an extension arm 45. The extension arms 45 are fixedly connected to their associated connecting rods 30.

An opposed end 44.2 of each arm 44 is connected to a first end 46.1 of a crank 46. An opposed end 46.2 of the crank 46 is fixedly connected to a further driven shaft 48.

It is to be noted in this embodiment that the ends 30.2 of the connecting rods 30 are offset with respect to each other and one of them does not lie along the common axis 26. With this configuration, the same effect is achieved as if the rods 30 lay on a common axis.

In respect of each embodiment of the invention, as the drive shaft 12 rotates, it causes cam-like motion to be imparted to the crank 18. This causes reciprocal displacement of the ends 22.2 of the arms 22 of the linkage assembly 20 along the axis 26 or axes. This reciprocal displacement is imparted to the connecting rods 30 of the connecting assembly 28 and, in turn, to the slides 32. Once again, it is to be noted that the slides 32 move along the axis 26 or axes. In so doing, reciprocal displacement is imparted to the arms 36 of the further linkage assemblies 34 and this imparts a similar cam-like motion to the crank 40 as is imparted to the crank 18. This then causes the driven shafts 14 and 16 to rotate at the same speed as the drive shaft 12. Also, in the case of the embodiment illustrated in Figure 3 of the drawings, the crank 46 moves in a similar manner to the crank 18 imparting rotary motion to the shaft 48.

It is a particular advantage of the invention that a motion transfer mechanism is provided which does not rely on chains, gears or the like. It will appreciated that chains and gears require lubrication which can adversely affect products, in particular, food and beverage products, on a production line. Also, the need for maintenance is reduced.

## Claims

1. A transfer mechanism for transferring rotary motion at one location to rotary motion at a second, distant location, the transfer mechanism including
a first connecting element having a first end, which is fixedly connectable to a rotatable member to rotate therewith, in use, and having an opposed end;
a first linkage assembly, having a first end which is connected to the opposed end of the first connecting element and an opposed end which is constrained to be displaceable reciprocally along a predetermined axis;
an elongate connecting assembly, a first end of which is connected to said opposed end of the first linkage assembly, so that its movement is also constrained along said predetermined axis;
at least one further linkage assembly, a first end of which is connected to the elongate connecting assembly at a predetermined connection point, the point being spaced from the first linkage assembly and also lying on the predetermined axis; and
a second connecting element having a first end connected to an opposed end of the further linkage assembly, the second connecting element having an opposed end which is fixedly connectable, in use, to a second rotatable element so that rotation of the first rotatable element is transferred via the connecting elements, the linkage assemblies and the connecting assembly to identical rotational movement of the second rotatable element.

2. The transfer mechanism as claimed in Claim 1, in which the first connecting element is in the form of a first crank, a first end of which is connected to the first rotatable member and an opposed, second end of which is connected to the first linkage assembly.

3. The transfer mechanism as claimed in Claim 2, in which the first linkage assembly includes a pair of link arms, with a first end of each link arm being pivotally connected to the second end of the first crank at a pivotal connection point, the arms diverging from the connection point so that a second end of each link arm lies on the axis.

4. The transfer mechanism as claimed in Claim 3, in which said second end of each link arm is connected to a slide which is constrained to slide reciprocally along the predetermined axis.

5. The transfer mechanism as claimed in Claim 4, in which the elongate connecting assembly comprises a pair of elongate connecting rods, a first end of each connecting rod being pivotally connected to a second end of its associated link arm via the slide so that the first end of each rod is constrained to be displaceable reciprocally along the predetermined axis.

6. The transfer mechanism as claimed in Claim 5, in which an opposed, second end of each connecting rod is mounted on a slide, the slide at the second end of each arm also being constrained to be displaceable reciprocally along the predetermined axis.

7. The transfer mechanism as claimed in Claim 6, in which the said further linkage assembly also comprises a pair of link arms having substantially the same configuration as the link arms of the first linkage assembly, with a first end of each link arm of the said further linkage assembly being connected to the opposed end of its associated connecting rod pivotally via the slide and a second end of each link arm being pivotally connected to the first end of the second connecting element.

8. The transfer mechanism as claimed in Claim 7, in which the second connecting element is in the form of a second crank with an opposed, second end of the second crank being fixedly connected to the second rotatable element.

9. The transfer mechanism as claimed in any one of the preceding claims, which includes a plurality of linkage assemblies, each of which has an end which is connected to the connecting assembly, such that the rotary motion of the first rotatable member is imparted to each rotatable member to which each of the linkage assemblies is connected.

10. The transfer mechanism as claimed Claim 9, in which certain of the linkage assemblies are aligned with each other on opposite sides of the connecting assembly.

11. The transfer mechanism as claimed Claim 10, in which the linkage assemblies lie in different planes, the planes being at an obtuse angle relative to one another.

12. A transfer mechanism for transferring rotary motion at one location to rotary motion at a second, distant location, substantially as herein described with reference to the accompanying drawings.
